# EUROPÄISCHE PATENTSCHRIFT

(11) **EP 3 326 707 B1**
(45) Veröffentlichungstag und Bekanntmachung des Hinweises auf die Patenterteilung: **03.06.2020**
(21) Anmeldenummer: 17193951.5
(22) Anmeldetag: 29.09.2017
(51) Int. Cl.: B01D 46/24

(54) **EINSTÜCKIGE, RINGFÖRMIGE DICHTUNG**
SINGLE-PIECE, ANNULAR SEAL
JOINT UNITAIRE EN FORME D'ANNEAU

(30) Priorität: 24.11.2016 DE 102016223280
(43) Veröffentlichungstag der Anmeldung: 30.05.2018
(73) Patentinhaber: Filtration Group GmbH, 74613 Öhringen (DE)
(72) Erfinder: WIERLING, Reinhard, 74629 Pfedelbach (DE)
(74) Vertreter: BRP Renaud & Partner mbB Rechtsanwälte Patentanwälte Steuerberater

(56) Entgegenhaltungen:
- WO-A1-2012/007804
- DE-A1- 3 838 540
- DE-A1- 10 235 904
- DE-U1-202005 013 478
- DE-U1-202008 009 504

## Beschreibung

Die vorliegende Erfindung betrifft eine einstückige, ringförmige Dichtung aus Ethylen-Propylen-Dien-Kautschuk (EPDM) für den Anbau an eine Endscheibe eines Ringfilterelements. Die Erfindung betrifft außerdem ein Ringfilterelement mit zumindest einer solchen Dichtung sowie eine Filtereinrichtung mit zumindest einem solchen Ringfilterelement.

Aus der DE 44 29 987 A1 sind ein Verfahren und eine Vorrichtung zur Reinigung von Filtern bekannt, wobei während der Reinigungsphase des Filters Druckluft in den Filter eingeleitet und der Filter über ein Dichtungselement verschlossen wird, so dass durch den im Inneren des Filterelements entstehenden Überdruck der an der Außenseite des Filters haftende Filterkuchen entfernt werden kann. Nach der Reinigungsphase wird die Druckluftzufuhr geschlossen und das Dichtungselement geöffnet, wobei die Betätigung des Dichtungselements und die Zufuhr der Druckluft in das Innere des Filters zeitversetzt zueinander erfolgen.

Aus der DE 38 38 540 A1 ist eine Filterpatrone, insbesondere für einen Ansaugluftfilter einer Brennkraftmaschine, mit einem aus einer zick zackförmig gefalteten Filterpapierbahn bestehenden hohlzylindrischen Filterpapierkörper bekannt, der an wenigstens einer Stirnseite mit einem Stütz- und Dichtring verbunden ist, mittels welchem der Filterpapierkörper als Einsatz in dem Filtergehäuse unter Vermeidung einer unmittelbaren Luftverbindung zwischen Zuluftseite und Reinluftseite des Luftfilters halterbar ist. Der Stütz- und Dichtring ist ein einstückiges Formteil aus Gummi oder elastischem Kunststoff und weist eine flach kreisringförmige Aufnahmefläche auf. Dabei weist mindestens ein äußerer Begrenzungssteg radiale Schlitze oberhalb der Aufnahmefläche auf, in denen eine mit der Filterpapierbahn verbundene Klebemasse verankert ist.

Generell werden Dichtungen an Endscheiben von Ringfilterelementen heutzutage oftmals aus geschäumten Polyurethanen hergestellt, die ihre Dichtwirkung erst bei Kompression entfalten. Durch diesen Umstand muss das Ringfilterelement beim Einbauen in eine Filtereinrichtung im Hinblick auf seine Dichtung komprimiert werden, wodurch eine vergleichsweise kraftaufwendige Montage erforderlich ist. Bei einem Rückspülen des Ringfilterelements muss zusätzlich auch die Dichtung desselben aufwendig in dem am Ringfilterelement angebautem Zustand mitgereinigt werden, da eine Abnahme nicht möglich ist.

Die vorliegende Erfindung beschäftigt sich daher mit dem Problem, für ein Ringfilterelement eine verbesserte Ausführungsform anzugeben, die insbesondere eine Reinigung von Ringfilterelementen deutlich vereinfacht.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, eine Dichtung für eine Endscheibe eines Ringfilterelements erstmals als vergleichsweise einfach auf der Endscheibe zu montierenden bzw. von der Endscheibe abzuziehenden EPDM-Dichtkörper auszubilden, der zum Reinigen des Ringfilterelements einfach von der Endscheibe abgezogen und separat gereinigt werden kann. Das erfindungsgemäße Ringfilterelement weist eine Dichtung auf, die einstückig aus Ethylen-Propylen-Dien-Kautschuk (EPDM) ausgebildet ist und dadurch sowohl kostengünstig als auch qualitativ hochwertig und darüber hinaus mit individuell festlegbaren Eigenschaften hergestellt werden kann. Zudem ist eine derartige Wechseldichtung aus EPDM sogar für den Kontakt mit Lebensmitteln geeignet. Die Dichtung weist einen Ringkörper mit einer stirnseitig schräg zur Achse des Ringkörpers radial nach außen abstehenden, trichterförmigen Dichtlippe auf, sowie einen Halterand, der auf der von der Dichtlippe abgewandten Stirnseite des Ringkörpers der Dichtung absteht und an seinem freien Ende eine nach innen, insbesondere nach radial innen, weisende Haltekontur zum Hintergreifen der Endscheibe besitzt. Durch den erfindungsgemäßen Aufbau mit der einerseits des Ringkörpers angeordneten Dichtlippe und dem andererseits angeordneten Halterand kann ein vergleichsweise einfaches Montieren der Dichtung auf der Endscheibe des Ringfilterelements sowie andererseits auch eine vergleichsweise einfache Demontage von der Endscheibe, bspw. durch ein einfaches Abziehen erfolgen. Durch die einfache Abnehmbarkeit der erfindungsgemäßen Dichtung kann diese bei einem Reinigen des Ringfilterelements oder bei einem Austausch des Ringfilterelements einfach abgezogen, separat gereinigt und wieder verwendet werden, was auch unter Umweltschutz- und Ressourcengesichtspunkten erhebliche Vorteile bietet. Über die schräg zur Achse des Ringkörpers radial nach außen abstehende, trichterförmige Dichtlippe kann darüber hinaus eine vergleichsweise einfache Montage des Ringfilterelements in einer zugehörigen Filtereinrichtung erreicht werden, ohne dass hierfür die Dichtung in der bislang erforderlichen Art und Weise, das heißt mit viel Kraft, komprimiert werden müsste, da zur Herstellung der Dichtfunktion ein einfaches Abwinkeln der Dichtlippe ausreicht. Von besonderem Vorteil bei der erfindungsgemäßen Dichtung ist somit, dass diese kostengünstig und in nahezu beliebiger Ausführungsform hergestellt werden kann und vergleichsweise einfach zu montieren bzw. zu demontieren und dadurch insbesondere auch wiederzuverwenden ist.

Bei einer vorteilhaften Weiterbildung der erfindungsgemäßen Lösung weist der Ringkörper einen größeren Außendurchmesser auf als die Dichtlippe. Dies bietet den großen Vorteil, dass die Dichtlippe zu keinem Zeitpunkt komplett umgebogen werden kann, sondern sich bei maximaler axialer Kompression an eine Stirnseite des Ringkörpers anliegt.

Bei einer vorteilhaften Weiterbildung der erfindungsgemäßen Lösung weist die Dichtung eine Shore-A-Härte von 80 +/- 10 auf. Dies bietet den besonderen Vorteil, dass die Dichtung steif genug ist, um auch bei Temperaturen von 90 °C nicht abzuknicken und so dicht bleibt.

Zweckmäßig schließt die Dichtlippe mit einer ersten Oberfläche einen Winkel α von ca. 50° mit der Achse des Ringkörpers ein. Zusätzlich oder alternativ kann die Dichtlippe mit einer zweiten Oberfläche einen Winkel β von ca. 45° mit der Radialen des Ringkörpers einschließen. Durch die Addition der beiden Winkel, die zusammen mehr als 90° ergeben, ist somit klar, dass die beiden Oberflächen der Dichtlippe schräg zueinander verlaufen, insbesondere einen Winkel von ca. 5° zueinander einschließen. Durch den sich zu seinem freien Ende hin verjüngenden Querschnitt der Dichtlippe weist diese eine leichte und elastische Verstellbarkeit auf, wodurch sich die Dichtlippe optimal an entsprechende Gegendichtkonturen anlegen kann. Versuche haben dabei gezeigt, dass durch eine erfindungsgemäße Ausrichtung und Ausgestaltung der Dichtlippe in Bezug auf die Winkel α und β eine besonders gute Dichtwirkung erzielbar ist. Durch die Winkelstellung nach außen, ist gewährleistet, dass mit zunehmendem Druckverlust des Ringfilterelementes die Dichtheit sichergestellt wird, da der Druck außen immer größer ist als im Inneren des Ringfilterelementes und so eine Selbstabdichtung erfolgt. Die Dichtlippe wird vom Außendruck gegen eine Filterplatte gedrückt.

Die Dichtung umgreift mit ihrer am Halterand angeordneten Haltekontur die Endscheibe randseitig und ist dadurch zuverlässig auf der Endscheibe und damit am Ringfilterelement fixiert. Bei einem Austausch des Ringfilterelements oder einer Reinigung desselben kann die erfindungsgemäße Dichtung einfach von diesem abgezogen und nach einer separaten Reinigung wieder auf das gereinigte Ringfilterelement oder auf ein neues Ringfilterelement aufgestülpt werden. Hierdurch lässt sich nicht nur eine Ressourcenschonung, sondern auch eine Kosteneinsparung erreichen.

Zweckmäßig ist ein Innendurchmesser des Halterandes kleiner als ein Außendurchmesser der zugehörigen Endscheibe des Ringfilterelements. Hierdurch kann bei einem Aufstülpen der Dichtung auf die zugehörige Endscheibe ein radiales und elastisches Spannen derselben erfolgen, wodurch diese unter Vorspannung auf der Endscheibe fixiert werden kann und dadurch einen besonders zuverlässigen Sitz aufweist.

Die vorliegende Erfindung beruht weiter auf dem allgemeinen Gedanken, eine Filtereinrichtung, insbesondere ein Gas- oder Flüssigfilter, insbesondere ein Luftfilter, ein Kraftstofffilter oder ein Schmierstofffilter, mit einem Ringfilterelement entsprechend den vorherigen Absätzen auszustatten. Durch die Übertragung der Dichtung auf das Ringfilterelement und des Ringfilterelements samt der Dichtung in die erfindungsgemäße Filtereinrichtung, können die zuvor beschriebenen Vorteile der Dichtung auch auf die gesamte Filtereinrichtung übertragen werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch eine erfindungsgemäße einstückige, ringförmige Dichtung aus Ethylen-Propylen-Dien-Kautschuk,
- Fig. 2: eine Detaildarstellung B aus Fig. 1,
- Fig. 3: eine Schnittdarstellung durch ein erfindungsgemäßes Ringfilterelement mit der in der Fig. 1 gezeigten Dichtung.

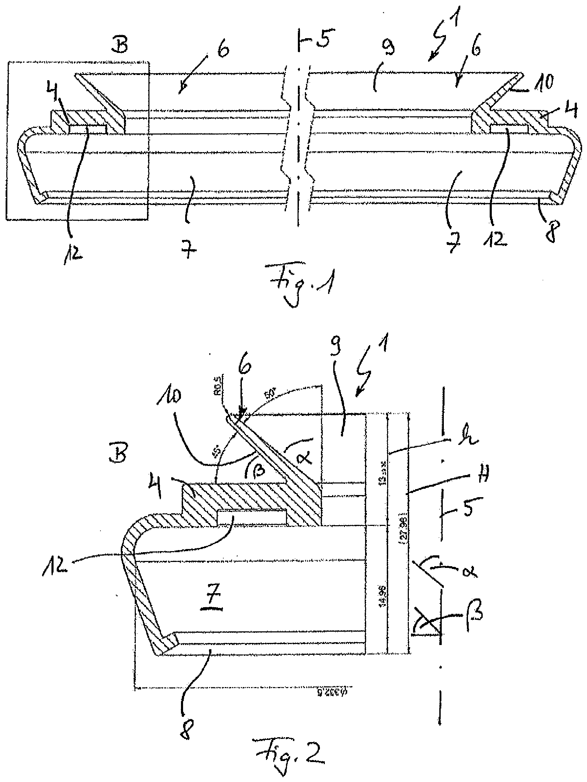

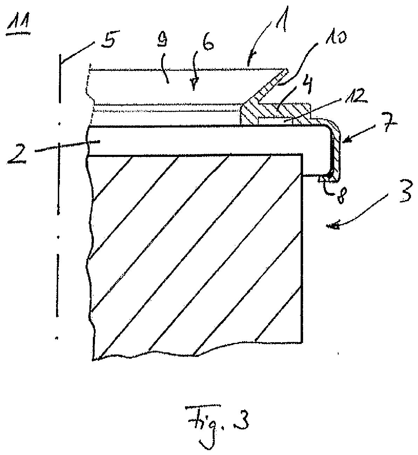

Entsprechend den Fig. 1 bis 3, weist eine einstückige, ringförmige Dichtung 1 aus Ethylen-Propylen-Dien-Kautschuk für den Anbau an eine Endscheibe 2 eines Ringfilterelements 3 (vgl. Fig. 3) einen Ringkörper 4 mit einer stirnseitig schräg zur Achse 5 des Ringkörpers 4 radial nach außen abstehenden, trichterförmigen Dichtlippe 6 auf. Darüber hinaus weist die Dichtung 1 einen Halterand 7 auf, der auf der von der Dichtlippe 6 abgewandten Stirnseite des Ringkörpers 4 absteht und an seinem freien Ende eine nach innen weisende Haltekontur 8 zum Hintergreifen der Endscheibe 2 besitzt. Die Haltekontur 8 kann dabei in der Art eines nach innen ragenden Ringkragens ausgebildet sein.

Die Dichtlippe 6 schließt mit einer ersten Oberfläche einen Winkel α von ca. 50° mit der Achse 5 des Ringkörpers 4 bzw. der Dichtung 1 ein, während die Dichtlippe 6 mit einer zweiten und von der ersten Oberfläche 9 abgewandten Oberfläche 10 einen Winkel β von ca. 45° mit der Radialen des Ringkörpers 4 bzw. der Dichtung 1 einschließt. Zusammen ergeben der Winkel α und der Winkel β somit mehr als 90°, woraus folgt, dass die Dichtlippe 6 einen sich zu ihrem freien Ende hin verjüngenden Querschnitt aufweist und die beiden Oberflächen 9, 10 unter einem Winkel von ca. 5° schräg zueinander verlaufen.

Die Dichtlippe 6 besitzt zusammen mit dem Ringkörper 4 eine axiale Höhe h von ca. 13 mm, wobei die Dichtung 1 selbst eine axiale Höhe H von ca. 28 mm aufweisen kann. Der für die Dichtung 1 verwendete Kautschuk besitzt vorzugsweise eine Shore-A-Härte von 80 +/- 10.

Betrachtet man die Fig. 3, so kann man dort erkennen, dass die Dichtung 1 auf das Ringfilterelement 3 bzw. auf dessen Endscheibe 2 aufgestülpt und mit ihrem Halterand 7 bzw. ihrer Haltekontur 8 die Endscheibe 2 des Ringfilterelements 2 randseitig umgreift und darüber an der Endscheibe 2 fixiert ist. Ein Innendurchmesser des Halterandes 7 ist dabei kleiner als ein Außendurchmesser der zugehörigen Endscheibe 2, wodurch die Dichtscheibe 1 in elastisch vorgespanntem Zustand auf der Endscheibe 2 gehalten ist. Das Ringfilterelement kann dabei bspw. in einer Filtereinrichtung 11, insbesondere in einem Gas- oder Flüssigkeitsfilter, eingesetzt sein.

Betrachtet man nochmals die Detaildarstellung in Fig. 2, so kann man erkennen, dass der Ringkörper 4 einen größeren Außendurchmesser aufweist als die Dichtlippe 6, wodurch auch bei einem vollständigen Anliegen der Dichtlippe 6 über ihre zweite Oberfläche 10 an dem Ringkörper 4 kein Umkippen in die andere Richtung befürchtet werden muss. Die Dichtung 1 weist zudem noch einen Ringraum 12 auf, der eine Abdichtung zwischen der Dichtung 1 und der Endscheibe 2 des Ringfilterelements 3 in der Art einer Labyrinthdichtung gestaltet und der zusätzlich eine verbesserte Elastizität des Halterands 7 bietet, der sich durch den hohlen Ringraum 12 im Ringkörper 4 dieser leichter verbiegen lässt.

Mit der erfindungsgemäßen Dichtung 1 und mit dem erfindungsgemäßen Ringfilterelement 3 lassen sich nicht nur Ressourcen schonen, sondern auch Kosten einsparen, da die Dichtung 1 bei einem Austausch oder bei einer Reinigung des Ringfilterelements 3 einfach von dessen Endscheibe 2 abgezogen, separat gereinigt und bei einem Austauschringfilter wieder neu aufgestülpt werden kann. Im Vergleich zu bislang aus Polyurethanschaum ausgebildeten Dichtungen, erleichtert die erfindungsgemäße Dichtung 1 auch eine Montage des Ringfilterelements 3 in der Filtereinrichtung 11, da zur Erzielung der Dichtwirkung lediglich noch die Dichtlippe 6 leicht an eine gegenüberliegende Dichtkontur angelegt werden muss und nicht wie bislang der aus Polyurethanschaum bestehende Dichtkörper stark komprimiert werden muss.

## Patentansprüche

1. Ringfilterelement (3) mit zumindest einer Endscheibe (2) und einer darauf abnehmbar angebrachten einstückigen, ringförmigen Dichtung (1) aus Ethylen-Propylen-Dien-Kautschuk (EPDM),
- mit einem Ringkörper (4) mit einer stirnseitig schräg zur Achse (5) des Ringkörpers (4) radial nach außen abstehenden, trichterförmigen Dichtlippe (6),
- mit einem Halterand (7), der auf der von der Dichtlippe (6) abgewandten Stirnseite des Ringkörpers (4) absteht und an seinem freien Ende eine nach innen weisende Haltekontur (8) zum Hintergreifen der Endscheibe (2) aufweist,
- wobei die Dichtung (1) mit ihrer am Halterand (7) angeordneten Haltekontur (8) die Endscheibe (2) randseitig umgreift.

2. Ringfilterelement nach Anspruch 1,
**dadurch gekennzeichnet,**
**dass** die Dichtlippe (6) mit einer ersten Oberfläche (9) einen Winkel α von ca. 50° mit der Achse (5) der Dichtung (1) einschließt.

3. Ringfilterelement nach einem der Ansprüche 1 und 2,
**dadurch gekennzeichnet,**
**dass** der Ringkörper (4) einen größeren Außendurchmesser aufweist als die Dichtlippe (6).

4. Ringfilterelement nach einem der Ansprüche 1 bis 3,
**dadurch gekennzeichnet,**
**dass** die Dichtung (1) eine Shore-A Härte von 80 +/-10 aufweist.

5. Ringfilterelement nach einem der vorhergehenden Ansprüche,
**dadurch gekennzeichnet,**
**dass** die Dichtlippe (6) mit einer zweiten Oberfläche (10) einen Winkel β von ca. 45° mit der Radialen der Dichtung (1) einschließt.

6. Ringfilterelement nach einem der vorhergehenden Ansprüche,
**dadurch gekennzeichnet,**
**dass** die Dichtlippe (6) einen sich zu ihrem freien Ende hin verjüngenden Querschnitt aufweist.

7. Ringfilterelement nach einem der vorhergehenden Ansprüche,
**dadurch gekennzeichnet,**
- **dass** die Dichtlippe (6) zusammen mit dem Ringkörper (4) eine axiale Höhe h von ca. 13 mm aufweist, und/oder
- **dass** die Dichtung (1) axiale Höhe H von ca. 28mm aufweist.

8. Ringfilterelement nach einem der vorherigen Ansprüche,
**dadurch gekennzeichnet,**
**dass** ein Innendurchmesser des Halterandes (7) kleiner ist als ein Außendurchmesser der zugehörigen Endscheibe (2).

9. Filtereinrichtung (11), insbesondere ein Gas- oder Flüssigfilter, mit einem Ringfilterelement (3) nach einem der vorherigen Ansprüche.

## Claims

1. Ring filter element (3) with at least one end disc (2) and a one-piece, annular seal (1) attached removably onto the latter made from ethylene propylene diene rubber (EPDM),
- having a ring body (4) with a funnel-shaped sealing lip (6) projecting radially outwards on the end face obliquely to the axis (5) of the ring body (4),
- having a holding edge (7), which projects on the end face of the ring body (4) facing away from the sealing lip (6) and at its free end has an inwardly pointing holding contour (8) for gripping behind the end disc (2),
- wherein the seal (1) with its holding contour (8) arranged on the holding edge (7) grips around the edge of the end disc (2).

2. Ring filter element according to claim 1,
**characterised in that**
the sealing lip (6) with a first surface (9) forms an angle α of approximately 50° with the axis (5) of the seal (1).

3. Ring filter element according to any of claims 1 and 2,
**characterised in that**
the ring body (4) has a larger outer diameter than the sealing lip (6).

4. Ring filter element according to any of claims 1 to 3,
**characterised in that**
the seal (1) has a Shore A hardness of 80 +/-10.

5. Ring filter element according to any of the preceding claims,
**characterised in that**
the sealing lip (6) with a second surface (10) forms an angle β of approximately 45° with the radial side of the seal (1).

6. Ring filter element according to any of the preceding claims,
**characterised in that**
the sealing lip (6) has a cross-section which tapers towards its free end.

7. Ring filter element according to any of the preceding claims,
**characterised in that**
- the sealing lip (6) together with the ring body (4) has an axial height h of approximately 13 mm and/or
- the seal (1) has an axial height H of approximately 28 mm.

8. Ring filter element according to any of the preceding claims,
**characterised in that**
an inner diameter of the holding edge (7) is smaller than an outer diameter of the associated end disc (2).

9. Ring filter element (11), in particular a gas or fluid filter, with a ring filter element (3) according to any of the preceding claims.

## Revendications

1. Élément filtrant annulaire (3) muni d'au moins un disque d'extrémité (2) et un joint (1) annulaire d'un seul tenant fixé de manière amovible sur celui-ci en caoutchouc éthylène-propylène-diène (EPDM),
- comprenant un corps annulaire (4) présentant une lèvre d'étanchéité (6) en forme d'entonnoir du côté frontal de manière oblique par rapport à l'axe (5) du corps annulaire (4) qui fait saillie radialement vers l'extérieur,
- comprenant un bord de maintien (7), qui fait saillie sur le côté frontal du corps annulaire (4) opposé à la lèvre d'étanchéité (6) et présente à son extrémité libre un contour de maintien (8) dirigé vers l'intérieur permettant de venir en prise par l'arrière avec le disque d'extrémité (2),
- le joint (1) entourant du côté du bord le disque d'extrémité (2) avec son contour de maintien (8) disposé sur le bord de maintien (7).

2. Élément filtrant annulaire (3) selon la revendication 1, **caractérisé en ce que** la lèvre d'étanchéité (6) forme avec une première surface (9) un angle α d'env. 50 ° avec l'axe (5) du joint (1).

3. Élément filtrant annulaire selon l'une quelconque des revendications 1 et 2, **caractérisé en ce que** le corps annulaire (4) présente un diamètre extérieur plus grand que celui de la lèvre d'étanchéité (6).

4. Élément filtrant annulaire selon l'une quelconque des revendications 1 à 3, **caractérisé en ce que** le joint (1) présente une dureté de surface Shore A de 80 +/-10.

5. Élément filtrant annulaire selon l'une quelconque des revendications précédentes, **caractérisé en ce que** la lèvre d'étanchéité (6) forme avec une deuxième surface (10) un angle β d'env. 45 ° avec l'axe radial du joint (1).

6. Élément filtrant annulaire selon l'une quelconque des revendications précédentes, **caractérisé en ce que** la lèvre d'étanchéité (6) présente une section transversale se rétrécissant vers son extrémité libre.

7. Élément filtrant annulaire selon l'une quelconque des revendications précédentes, **caractérisé en ce**
- **que** la lèvre d'étanchéité (6) conjointement avec le corps annulaire (4) présente une hauteur axiale h d'env. 13 mm, et/ou
- **que** le joint (1) présente une hauteur axiale h d'env. 28 mm.

8. Élément filtrant annulaire selon l'une quelconque des revendications précédentes, **caractérisé en ce**
**qu'**un diamètre intérieur du bord de maintien (7) est inférieur à un diamètre extérieur du disque d'extrémité (2) correspondant.

9. Dispositif de filtration (11), en particulier un filtre à gaz ou à liquides, muni d'un élément filtrant annulaire (3) selon l'une quelconque des revendications précédentes.
